# EUROPÄISCHE PATENTSCHRIFT

(11) **EP 1 764 177 B1**
(45) Veröffentlichungstag und Bekanntmachung des Hinweises auf die Patenterteilung: **16.12.2009**
(21) Anmeldenummer: 06018732.5
(22) Anmeldetag: 07.09.2006
(51) Int. Cl.: B23D 47/04, B23Q 7/04

(54) **Ablängvorrichtung für Glasleisten oder entsprechende Stabprofile und Verfahren zum Ablängen von Glasleisten oder entsprechenden Stabprofilen**
Apparatus for cutting glazing bars or the like to lenth and method for cutting glazing bars or the like
Dispositif pour couper de barres de vitrage à longueur et procédé pour couper de barres de vitrage ou similaires

(30) Priorität: 16.09.2005 DE 102005044496
(43) Veröffentlichungstag der Anmeldung: 21.03.2007
(73) Patentinhaber: ROTOX Besitz- und Verwaltungsgesellschaft mbH, 65611 Brechen (DE)
(72) Erfinder:
(74) Vertreter: Müller, Eckhard

(56) Entgegenhaltungen:
- EP-A- 1 516 696
- DE-A1- 2 421 719
- DE-A1- 3 927 530
- DE-C1- 10 242 002

## Beschreibung

Die Erfindung betrifft eine Ablängvorrichtung für Glasleisten oder entsprechende Stabprofile, welche auf Gehrung zusammengefügt werden sollen, mit einer Einspanneinrichtung, die eine Anlage für das Stabprofil und wenigstens ein verstellbares Spannelement aufweist nach dem Oberbegriff von Anspruch 1. Weiterhin betrifft die Erfindung ein Verfahren zum Ablängen einer Glasleiste oder eines entsprechenden Stabprofils nach dem Oberbegriff von Anspruch 20.

### Stand der Technik

Derartige Ablängvorrichtungen dienen vornehmlich zum Einspannen des Profils während des Ablängens, insbesondere zum Durchführen von Schräg- oder Gehrungsschnitten. Eine Ablängvorrichtung der eingangs genannten Art ist aus der DE 102 42 002 C1 bekannt. Dort wird eine Einspannvorrichtung für eine Glasleiste beschrieben, wobei die Einspannvorrichtung eine Anlage und einen verstellbaren ersten Spanner aufweist. Weiterhin ist ein verstellbarer zweiter Spanner vorgesehen, wobei mit wenigstens einem der Spanner ein Drehmoment auf die Glasleiste ausgeübt wird, um diese um eine Schwenkachse mit einem Winkel zu drehen und in dieser Winkelposition die Glasleiste zwischen erstem und zweitem Spanner sowie der Anlage einzuspannen. Die Einspannvorrichtung dient in Kombination mit einer Ablängvorrichtung insbesondere zur Durchführung von Gehrungs- oder Schrägschnitten. Weiterhin ist auch ein Verfahren zum Ablägen von Glasleisten beschrieben.

Diese bekannte Vorrichtung ist bezüglich Geschwindigkeit und Genauigkeit der Ablängung von Glasleisten oder Stabprofilen verbesserungsfähig.

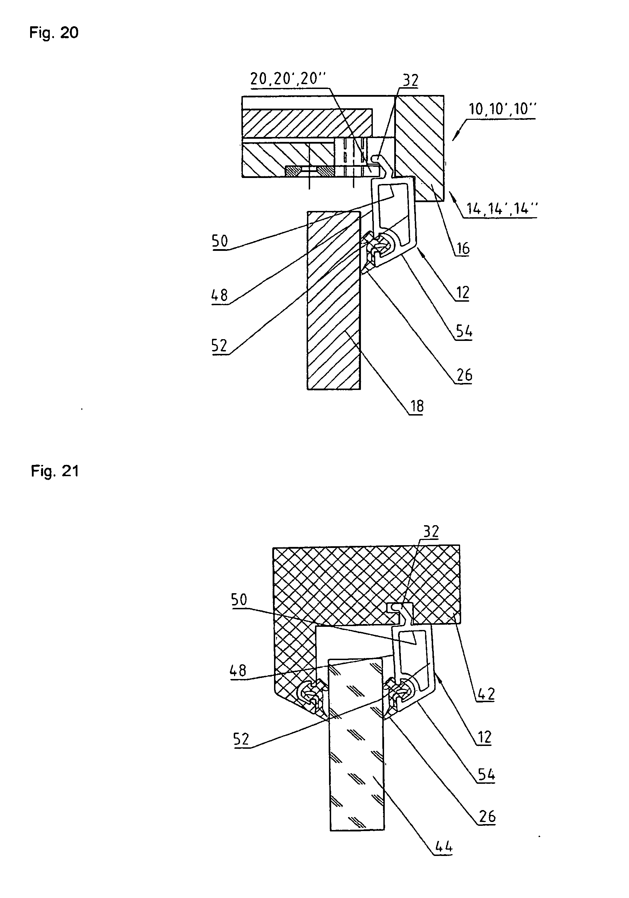

Wie aus Figur 21 der vorliegenden Anmeldung ersichtlich ist, bestehen Glasleisten 12 aus einem Stabprofil beziehungsweise Stabhohlprofil mit bevorzugt im Wesentlichen rechteckigem Profilquerschnitt. In einer unteren Profilwand 48 ist eine Dichtlippe 26 vorgesehen. An einer rückwärtigen Profilwand 50 ist der so genannte Profilfuß 32 angeformt. Gegenüberliegend der unteren Profilwand 48 ist die obere Profilwand 52 vorgesehen, während die vordere Profilwand 54 schräg geneigt ausgebildet sein kann. Diese Glasleisten 12 dienen zur Festlegung von Scheiben, beispielsweise Glassscheiben 44 in Fenster- oder Flügelrahmen 42. Dabei ist der Profilfuß 32 in einer entsprechend ausgebildeten Nut des Fensterrahmens aufgenommen, während die Dichtlippe 26 der Glasleiste 12 an der Glasscheibe 44 unter Spannung anliegt.

Die Einspanneinrichtung der Ablängvorrichtung gemäß der DE 102 42 002 C1 ist in Figur 19 dargestellt. Mit dieser Einspanneinrichtung werden Glasleisten 12 eingespannt, um diese dann individuell abzulängen beziehungsweise Gehrungs- oder Schrägschnitte durchzuführen. Die Glasleiste 12 ist mit dem Profilfuß 32 zwischen einem Spannelement 20 und einer Anlageleiste 16 in der Einspanneinrichtung aufgenommen und mittels des Spannelementes 20 in der Einspanneinrichtung 10 fixierbar. Dabei liegt die Glasleiste 12 mit der oberen Profilwand 52 an einer Anlage 14 der Anlageleiste 16 an. Im geöffneten Zustand des Spannelements 20 ist die Glasleiste 12 in die Einspanneinrichtung einführbar, da dann genügend Spiel zwischen dem Spannelement 20 und der Anlageleiste 16 vorhanden ist, um den Profilfuß 32 der Glasleiste 12 dort einzuführen. Da dieses Spiel jedoch sehr begrenzt ist, ist es notwendig, jede einzelne Glasleiste 12 durch das Bedienpersonal manuell mit dem Profilfuß 32 zwischen das Spannelement 20 und die Anlageleiste 16 einzuführen.

Die DE 39 27 530 A1 offenbart eine Vorrichtung zur Handhabung stangenförmigen Werkstückmaterials bei einer Kaltkreissäge, wobei das dem Schnittvorgang durch Vorschubspannbacken zugeführte Werkstückmaterial während des Schnittvorganges durch eine Vertikalspannbacke gegen den Werkstücktisch gespannt wird und zuvor horizontal gegen eine Anschlagleiste ausgerichtet wird, wobei die Spannmittel zur horizontalen Ausrichtung gleichzeitig dem Abtransport der abgetrennten Materialstücke dienen. Dabei ist vorgesehen, dass die horizontal wirksamen Spann- und Transportmittel eine in Spannstellung quer zur Materialvorschubrichtung stehende Zunge aufweisen, deren Spannbewegung gegen die Leiste eine im Wesentlichen vertikale Ausnehmung der Vertikalspannbacke zugeordnet ist, wobei die Zunge sowohl quer als auch parallel zur Materialvorschubrichtung bewegbar ist und die Querbeweglichkeit der Zunge bis an die Ebene der Leiste gegeben ist.

### Problem

Davon ausgehend liegt der vorliegenden Erfindung die Aufgabe zugrunde, eine Ablängvorrichtung beziehungsweise ein Verfahren der eingangs genannten Art dahingehend weiterzubilden, dass die Glasleisten oder Stabprofile exakter und schneller in die Ablängvorrichtung einführbar sind.

### Erfindung und vorteilhafte Wirkungen

Diese Aufgabe wird vorrichtungsgemäß durch eine Ablängvorrichtung mit den Merkmalen des Anspruchs 1 gelöst. Vorteilhafte Ausgestaltungen der Vorrichtung finden sich in den Ansprüchen 2 bis 19. Verfahrensmäßig wird die Aufgabe nach einem Verfahren mit den Merkmalen des Anspruchs 20 gelöst. Vorteilhafte Ausgestaltungen des erfindungsgemäßen Verfahrens finden sich in den Ansprüchen 21 und 22.

Die erfindungsgemäße Ablängvorrichtung zeichnet sich dadurch aus, dass eine wenigstens ein verstellbares Spannelement und eine Anlage aufweisende Zuführeinrichtung dazu ausgebildet ist, das Stabprofil aus der Positioniereinrichtung zu entnehmen und der Einspanneinrichtung zuzuführen, wobei das wenigstens eine Spannelement der Zuführeinrichtung zum Greifen eines Profilfußes des Stabprofils und zum Festspannen des Profilfußes ausgebildet ist und wobei das wenigstens eine verstellbare Spannelement der Einspanneinrichtung zum Einspannen des Profilfußes des Stabprofiles ausgebildet ist.

Dadurch ist es nicht mehr notwendig, dass jede einzelne Glasleiste zur Durchführung von Schräg- und Gehrungsschnitten separat durch das Bedienpersonal manuell in die Einspanneinrichtung eingeführt werden muss. Weiterhin ist erreicht, dass der eingespannte Profilfuß des Stabprofils in der Zuführeinrichtung fixiert ist und genau in der Lage in die Einspanneinrichtung eingeführt werden kann, die zum Fixieren des Stabprofils in der Einspanneinrichtung zum Ablängen beziehungsweise zur Durchführung von Schräg- oder Gehrungsschnitten notwendig ist.

Um dabei ein exaktes Einführen des Profilfußes des Stabprofils in die Einspanneinrichtung zu gewährleisten, ist es vorgesehen, dass die gesamte Zuführeinrichtung in Richtung der Einspanneinrichtung verfahrbar ist. Dadurch wird das in der Zuführeinrichtung fixierte Stabprofil in dieser fixierten Lage in Richtung der Einspanneinrichtung bewegt, so dass der Profilfuß des Stabprofils exakt zwischen Spannelement und einer Anlageleiste der Einspanneinrichtung positioniert und nachfolgend dort zum Ablängen der Glasleiste beziehungsweise zur Durchführung von Schräg- oder Gehrungsschnitten eingespannt werden kann.

Für eine einfache Entnahme des Stabprofils durch die Zuführeinrichtung von der Positioniereinrichtung, ist die Zuführeinrichtung über der Positioniereinrichtung verfahrbar und auf die Positioniereinrichtung absenkbar ausgebildet. Alternativ kann die Positioniereinrichtung dabei auch in Richtung der Zuführeinrichtung anhebbar ausgebildet sein.

Weiterhin erweist es sich als vorteilhaft, dass eine Steuereinrichtung zur Einstellung eines Verfahrweges der Zuführeinrichtung parallel zur Längsachse des in der Einspanneinrichtung eingespannten Stabprofils vorgesehen ist. Dadurch kann die Zuführeinrichtung, nachdem das Stabprofil in der Einspanneinrichtung eingespannt ist und das Spannelement der Zuführeinrichtung gelöst wurde, entsprechend der gewünschten Länge des Stabprofils verfahren werden. Ist der Verfahrweg erreicht, wird der Profilfuß mit dem Spannelement der Zuführeinrichtung in dieser eingespannt, das Spannelement der Einspanneinrichtung gelöst und das Stabprofil entsprechend der gewünschten Länge innerhalb der Einspanneinrichtung verschoben. Ist die Zuführeinrichtung entsprechend der gewünschten Länge des Stabprofils in Richtung der Einspanneinrichtung positioniert, wird das Stabprofil mittels des Spannelementes der Einspanneinrichtung wieder eingespannt und das Spannelement der Zuführeinrichtung kann gelöst werden. Nunmehr kann das Ablängen des Stabprofils mit der gewünschten Länge beziehungsweise die Durchführung eines Schräg- oder Gehrungsschnitts erfolgen.

Nach einer weiteren Ausgestaltung der Erfindung ist es vorgesehen, dass die Positioniereinrichtung ein verschwenkbares oder linear verfahrbares Positionierelement, einen Anschlag sowie eine Auflage aufweist, auf welcher ein Stabprofil zwischen Positionierelement und Anschlag zur Entnahme durch das Spannelement der Zuführeinrichtung anordenbar ist. Mittels des Positionierelementes kann ein auf der Auflage liegendes Stabprofil gegen den Anschlag verfahren werden. Dabei ist der Profilfuß des Stabprofils zur Entnahme durch das Spannelement der Zuführeinrichtung zu dieser hin weisend positioniert. Der Profilfuß kann nun durch das Positionierelement bei dessen Verschwenken oder Verfahren zwischen das Spannelement und die Anlage der Zuführeinrichtung eingeschoben werden. Alternativ kann die Zuführeinrichtung in Richtung des Stabprofils abgesenkt werden, bis sich der Profilfuß zwischen Spannelement und Anlage der Zuführeinrichtung befindet. Durch Schließen des Spannelementes der Zuführeinrichtung wird das Stabprofil in der Zuführeinrichtung fixiert.

Das Positionierelement kann dabei vorteilhafter Weise durch Federdruck beziehungsweise pneumatisch verschwenkbar beziehungsweise linear verfahrbar ausgebildet sein.

Weiterhin hat es sich als vorteilhaft erwiesen, dass ein Bevorratungsmagazin für eine Vielzahl von Stabprofilen und eine zwischen Bevorratungsmagazin und Positioniereinrichtung angeordnete Transporteinrichtung, wie beispielsweise ein Förderband oder dergleichen, vorgesehen ist, um den Automatisierungsgrad der gesamten Ablängvorrichtung nochmals zu erhöhen.

Um ein besonders sauberes Ablängen des Stabprofils zu ermöglichen, ist die Einspanneinrichtung ortsfest an einen Arbeitsbereich eines Ablängwerkzeuges, wie beispielsweise einer Säge oder dergleichen, angrenzend angeordnet. Dadurch wird ermöglicht, dass das abzulängende Stabprofil gerade dort fest fixiert wird, wo der Schnitt zum Ablängen des Stabprofils erfolgen soll. Somit können die beim Ablängen des Stabprofils möglicherweise auftretenden Schwingungen minimiert werden. Denn die durch Schwingungen des Ablängwerkzeuges auf das Stabprofil übertragenen Schwingungen sind dadurch reduziert. Ein sauberer Schnitt beim Ablängen des Stabprofils ist somit gegeben.

Vorteilhafter Weise ist auch eine wenigstens ein Spannelement aufweisende Spanneinrichtung zum Abtransport des Stabprofils vorgesehen, in welche das Stabprofil nach seinem Anschnitt mittels der Zuführeinrichtung durchschiebbar ist. Dadurch kann das in der gewünschten Länge abgelängte Stabprofil in einfacher Weise entnommen und mit der Abtransporteinrichtung zu dem gewünschten Ablageplatz transportiert werden. Auch hierdurch ergibt sich ein nochmals erhöhter Automatisierungsgrad der erfindungsgemäßen Ablängvorrichtung.

Dabei hat es sich als vorteilhaft erwiesen, dass die Abtransporteinrichtung in Längsrichtung und/oder quer zur Längsrichtung des eingespannten Stabprofils verfahrbar ausgebildet ist. Hierdurch werden Fehler beim Positionieren der Abtransporteinrichtung zur Aufnahme des abzulängenden Stabprofils vermieden, da das Verfahren der Abtransporteinrichtung nur in der Längsrichtung des Stabprofils möglich ist. Ein Bewegen der Abtransporteinrichtung außerhalb der Längsrichtung des in der Einspanneinrichtung eingespannten Stabprofils ist daher nicht möglich.

Nach einer weiteren Ausgestaltung der Erfindung ist eine Ablage für die abgelängten Stabprofile vorgesehen. Mittels der Abtransporteinrichtung werden die darin eingespannten abgelängten Stabprofile bis über die Ablage verfahren und dort abgelegt, beispielsweise durch Entspannen des Spannelements der Abtransporteinrichtung.

In vorteilhafter Weise weist die Ablage einen Schieber auf, mittels welchem die abgelängten Stabprofile einem Magazin zuführbar sind, so dass die abgelängten Stabprofile direkt geordnet ablegbar sind.

In vorteilhafter Weise weist das Magazin dabei eine Vielzahl von Ablageeinheiten auf, in welche zusammengehörende abgelängte Stabprofile, beispielsweise für den gleichen Fensterrahmen, ablegbar sind.

Das Magazin kann dabei sowohl zur vertikalen als auch zur horizontalen Beförderung der abgelängten Stabprofile ausgebildet sein, so dass die jeweilige Ablageeinheit derart positioniert werden kann, dass die abgelängten Stabprofile durch den Schieber in die gewünschte Ablageeinheit beförderbar sind. Auch durch diese Maßnahmen wird der Automatisierungsgrad der Ablängvorrichtung weiter maximiert.

Nach einem weiteren Gedanken der Erfindung weist die Einspanneinrichtung, die Zuführeinrichtung sowie die Spanneinrichtung wenigstens zwei Spannelemente und zwei Anlagen auf, so dass wenigstens zwei Stabprofile beziehungsweise zwei Glasleisten im Wesentlichen parallel und mit Abstand zueinander einspannbar und simultan bearbeitbar beziehungsweise ablängbar sind. Hierdurch ist es möglich, gleichzeitig zwei oder mehrere Stabprofile beziehungsweise Glasleisten mit identischen Maßen herzustellen. Dies ist insbesondere deshalb vorteilhaft, weil in rechteckigen beziehungsweise rautenförmigen Fenstern jeweils zwei identische Glasleisten zum Einsatz kommen. Diese können somit in einem Arbeitsschritt hergestellt werden, was nicht nur eine Zeitersparnis sowie weitere Automatisierung, sondern auch die Herstellung von in ihrer Abmessung identischen Glasleisten beziehungsweise Stabprofile gewährleistet.

Weiterhin hat es sich als vorteilhaft erwiesen, dass die Stabprofile beziehungsweise die Glasleisten in der Einspanneinrichtung, der Zuführeinrichtung und der Spanneinrichtung hängend einspannbar sind. Durch diese Maßnahme ist insbesondere gewährleistet, dass zum Ablegen der abgelängten Stabprofile nur das Spannelement der über die Ablage verfahrenen Spanneinrichtung in seine Öffnungsstellung verfahren werden muss. Die abgelängten Stabprofile fallen dann auf die Ablage, von welcher sie mittels des Schiebers in das Magazin befördert werden.

Dabei hat es sich weiterhin als vorteilhaft erwiesen, dass die Zuführeinrichtung und die Spanneinrichtung längsgeführt, vorzugsweise schienengeführt, ausgebildet sind. Dabei kann ein Schienensystem vorgesehen sein, an welchem die Zuführeinrichtung und die Spanneinrichtung hängend angeordnet sind. Eine einfache Entnahme der Stabprofile aus der Positioniereinrichtung und ein einfaches Ablegen der abgelängten Stabprofile auf der Ablage sind somit gewährleistet, da keine Gegenstände hinderlich im Weg angeordnet sind.

Das erfindungsgemäße Verfahren zum Ablängen von Glasleisten oder entsprechenden Stabprofilen zeichnet sich dadurch aus, dass das Stabprofil mittels einer Zuführeinrichtung aus der Positioniereinrichtung an dem Profilfuß des Stabprofils gegriffen und in Richtung der Einspanneinrichtung verfahren wird und dabei an einem ersten Abschnitt eines Profilfußes mittels eines Spannelementes der Zuführeinrichtung eingespannt wird.

Durch dieses Verfahren wird das Ablängen von Glasleisten beziehungsweise das Herstellen von Gehrungsschnitten bei Glasleisten oder entsprechenden Stabprofilen weitestgehend automatisiert, da ein manuelles Einführen der Glasleiste beziehungsweise des Stabprofils durch das Bedienpersonal in den Spanner der Einspanneinrichtung nicht mehr notwendig ist.

Dabei hat es sich als vorteilhaft erwiesen, dass das Stabprofil mittels einer Transporteinrichtung von einem Bevorratungsmagazin für eine Vielzahl von Stabprofilen der Positioniereinrichtung zugeführt wird. Auch dadurch wird der Automatisierungsgrad deutlich erhöht, da nur das Bevorratungsmagazin gefüllt werden kann. Alternativ kann auch das Befüllen automatisiert sein, so dass das Bevorratungsmagazin nachgefüllt wird, sobald eine gewisse Anzahl von Stabprofilen in dem Bevorratungsbehälter unterschritten wird.

Nach einem weiteren Gedanken der Erfindung werden die abgelängten Stabprofile einem Magazin zugeführt. Diese Maßnahme führt wiederum zu einem erhöhten Automatisierungsgrad des gesamten Verfahrens.

### Ausführungsbeispiel

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen.

Es zeigen:
- Figur 1 bis 7:: eine Draufsicht auf ein Ausführungsbeispiel der erfindungsgemäßen Vorrichtung in verschiedenen Arbeitspositionen,
- Figur 8:: eine Seitenansicht der erfindungsgemäßen Vorrichtung gemäß den Figuren 1 bis 7 ohne Ablage,
- Figur 9: eine vergrößerte Querschnittsdarstellung der Figur 8 im Bereich der Zuführeinrichtung,
- Figuren 10 bis 12:: ein Ausführungsbeispiel einer Ablage für abgelängte Stabprofile mit daran anschließendem Magazin in unterschiedlichen Betriebszuständen,
- Figuren 13 bis 15: die Ablage gemäß den Figuren 9 bis 11 mit einem anderen daran anschließenden Magazin in unterschiedlichen Betriebszuständen,
- Figuren 16 bis 19:: verschiedene Ausführungsformen von Positioniereinrichtungen der erfindungsgemäßen Vorrichtung,
- Figur 20:: Detailansicht eines Spannelementes der erfindungsgemäßen Vorrichtung mit darin eingespannter Glasleiste und
- Figur 21:: die spätere Montageposition der Glasleiste an einem Fenster- oder Flügelrahmen.

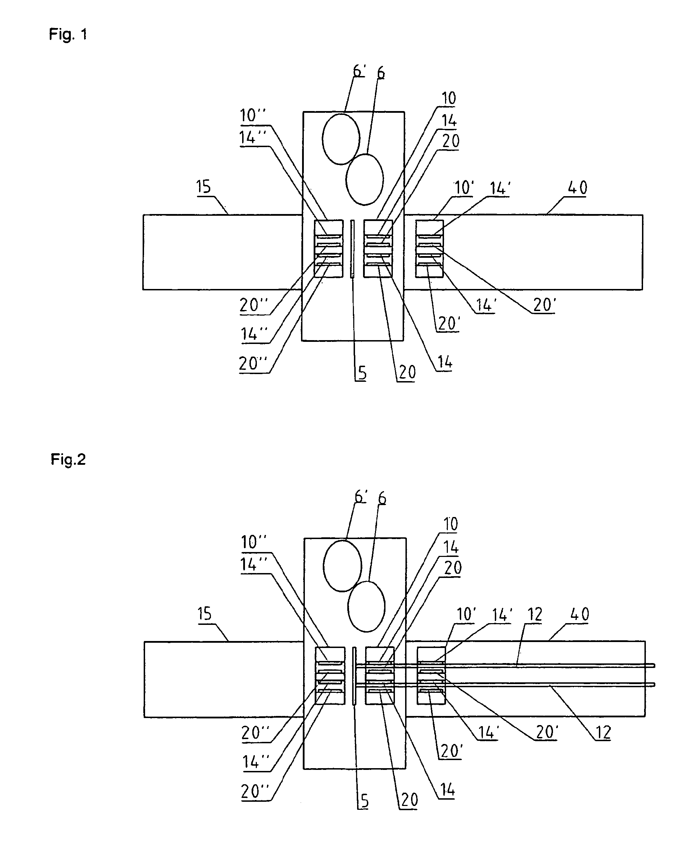

Die in den Figuren 1 bis 7 dargestellte erfindungsgemäße Ablängvorrichtung besteht im Wesentlichen aus einer Positioniereinrichtung 40, einer Zuführeinrichtung 10', einer Einspanneinrichtung 10, einer Spanneinrichtung 10" zum Abtransport abgelängter Glasleisten 12 und einer Ablage 15 für die abgelängten Glasleisten 12.

Wie insbesondere Figur 20 zu entnehmen ist, weisen sowohl die Zuführeinrichtung 10', die Einspanneinrichtung 10 als auch die Spanneinrichtung 10" Spannelemente 20, 20', 20'' und Anlagen 14, 14', 14" auf, zwischen denen eine Glasleiste 12 beziehungsweise ein entsprechenden Stabprofil eingespannt werden kann.

In Figur 20 ist dargestellt, wie eine Glasleiste 12 mittels des Spannelementes 20 und der Anlage 14 in der Einspanneinrichtung 10 eingespannt wird. In gleicher Weise ist die Glasleiste 12 mit Spannelementen 20, 20' und Anlagen 14', 14" in der Zuführeinrichtung 10'beziehungsweise der Abtransporteinrichtung 10" einspannbar. Wie dort ersichtlich, ist an einer unteren Profilwand 48 der Glasleiste 12 eine Dichtlippe 26 vorgesehen. An einer rückwärtigen Profilwand 50 ist der so genannte Profilfuß 32 angeformt. Gegenüberliegend der unteren Profilwand ist die obere Profilwand 52 vorgesehen, während die vordere Profilwand 54 schräg geneigt ausgebildet ist. Bei der Einspanneinrichtung 10, der Zuführeinrichtung 10' und der Abtransporteinrichtung 10" kommt die Glasleiste 12 mit einer der unteren Profilwand 48 gegenüberliegenden oberen Profilwand zur Anlage an eine Anlageleiste 16 der Anlage 14. Das verstellbare Spannelement 20 gelangt im Bereich des Glasleistenfußes 32 in eingespanntem Zustand der Glasleiste 12 zur Anlage. Das Spannelement 20 ist dabei zum Einspannen in Richtung der Anlage 14 hin und her verfahrbar.

In Figur 20 ist weiter auch ein zweites Spannelement 18 dargestellt, welches an der Dichtlippe 26 der unteren Profilwand 48 anliegt. Durch dieses Spannelement 18 kann ein Drehmoment auf die Glasleiste 12 ausgeübt werden, damit beim Schneiden beziehungsweise Ablängen der Glasleiste 12 die exakte Position der Glasleiste, wie sie auch beim Einbau in das Fenster gegeben ist, simuliert wird. Dadurch werden saubere Gehrungsschnitte gewährleistet, welche ein genaues Zusammenführen von Glasleisten beim späteren Einbau in das Fenster ermöglichen.

Zum Ablängen der Glasleisten 12 beziehungsweise entsprechender Stabprofile sind in vorliegendem Ausführungsbeispiel zwei Sägen 6 und 6' vorgesehen, deren Schnittwinkel gegeneinander verstellbar ist.

Gemäß der Darstellung in Figur 1 ist in die Vorrichtung noch keine Glasleiste 12 beziehungsweise kein Stabprofil eingelegt.

Mit der Zuführeinrichtung 10' wird eine auf der Positioniereinrichtung 40 abgelegte Glasleiste 12 eingespannt, indem die Zuführeinrichtung 10' in Richtung der Positioniereinrichtung 40 abgesenkt wird, bis der Profilfuß 32 der Glasleiste zwischen Spannelement 20' und Anlage 14' positioniert ist. In dieser Position wird nun der Profilfuß 32 zwischen dem Spannelement 20' und der Anlage 14' eingespannt, indem beispielsweise mittels eines nicht dargestellten Druckzylinders das Spannelement 20' in Richtung der Anlage 14' verfahren wird. Bei diesem Einspannen der Glasleiste 12 in der Zuführeinrichtung 10' ist darauf zu achten, dass die Glasleiste 12 zum Teil aus der Zuführeinrichtung 10' in Richtung der Einspanneinrichtung 10 herausragt, damit dieser Teil durch die Einspanneinrichtung 10 durchgeschoben werden kann.

In diesem Zustand wird die Zuführeinrichtung 10' mit eingespannter Glasleiste 12 von der Positioniereinrichtung 40 bis auf Höhe der Einspanneinrichtung 10 angehoben. Nunmehr wird die Zuführeinrichtung 10' in Richtung der Einspanneinrichtung 10 verfahren, bis das aus der Zuführeinrichtung 10' herausragende Ende der Glasleiste 12 an eine zwischen Einspanneinrichtung 10 und Spanneinrichtung 10" anordnenbare Anschlagleiste 5 anschlägt, wie dies in Figur 2 dargestellt ist. Dabei ist ein Bereich des Profilfußes 32 der Glasleiste 12 zwischen Spannelement 20 und Anlage 14 der Einspanneinrichtung 10 angeordnet. In diesem Zustand wird das Spannelement 20 der Einspanneinrichtung 10 mittels eines nicht dargestellten Druckzylinders in Richtung der Anlage 14 der Einspanneinrichtung 10 verfahren und somit die Glasleiste 12 an ihrem Profilfuß 32 in der Einspanneinrichtung 10 eingespannt.

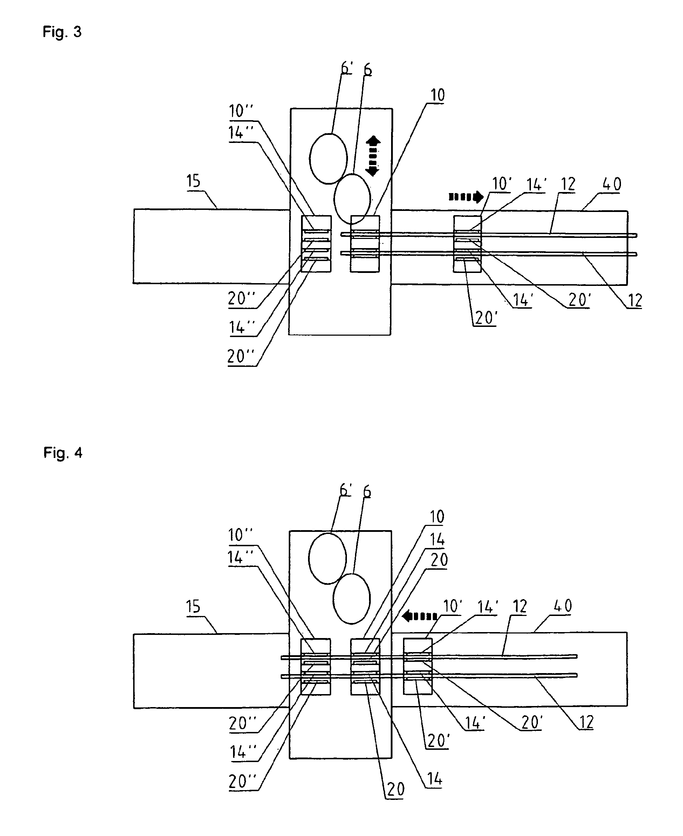

Diese Position bildet eine "Nulllage" zum Bearbeiten der Glasleiste 12. In diesem Zustand wird die Anschlagleiste 5 innerhalb der Bearbeitungseinrichtung abgesenkt. Mittels Sägen 6, 6' erfolgt der Anschnitt der Glasleiste 12. Während dessen kann bereits, wie insbesondere in Figur 3 dargestellt, bereits das Spannelement 20 der Zuführeinrichtung 10' wieder gelöst werden und die Zuführeinrichtung 10' um eine gewünschte Länge von der Einspanneinrichtung 10 weg verfahren werden. Dabei ist der Profilfuß 32 der Glasleiste 12 weiterhin zwischen der Anlage 14' und dem Spannelement 20' der Zuführeinrichtung 10' angeordnet, jedoch nicht eingespannt. Ist die gewünschte Verfahrlänge der Zuführeinrichtung 10' erreicht, wird diese angehalten und der Profilfuß 32 der Glasleiste 12 wieder zwischen Anlage 14' und Spannelement 20' der Zuführeinrichtung 10' eingespannt.

Um nun eine Glasleiste der gewünschten Länge zu erhalten, wird das Spannelement 20 der Einspanneinrichtung 10 wieder gelöst, so dass die Zuführeinrichtung 10' in Richtung der Einspanneinrichtung 10 verfahren werden kann, wie dies in Figur 4 dargestellt ist. Dabei wird der Verfahrweg der Zuführeinrichtung 10' und damit die gewünschte Länge der Glasleiste 12 mittels einer nicht dargestellten Steuereinrichtung gesteuert. Beim Verfahren der Zuführeinrichtung 10' in Richtung der Einspanneinrichtung 10 wird das angeschnittene Ende der Glasleiste 12 in Richtung Spanneinrichtung verschoben. Dabei wird der Profilfuß 32 zwischen eine Anlage 14" und ein Spannelement 20" der Spanneinrichtung 10" verfahren. Nachdem die Zuführeinrichtung 10' ihre Endposition erreicht hat, werden die Spannelemente 20, 20" der Einspanneinrichtung 10 und der Spanneinrichtung 10" mittels nicht dargestellter Druckzylinder gespannt, so dass die Glasleiste 12 innerhalb der Einspanneinrichtung 10 und der Spanneinrichtung 10" fest eingespannt ist.

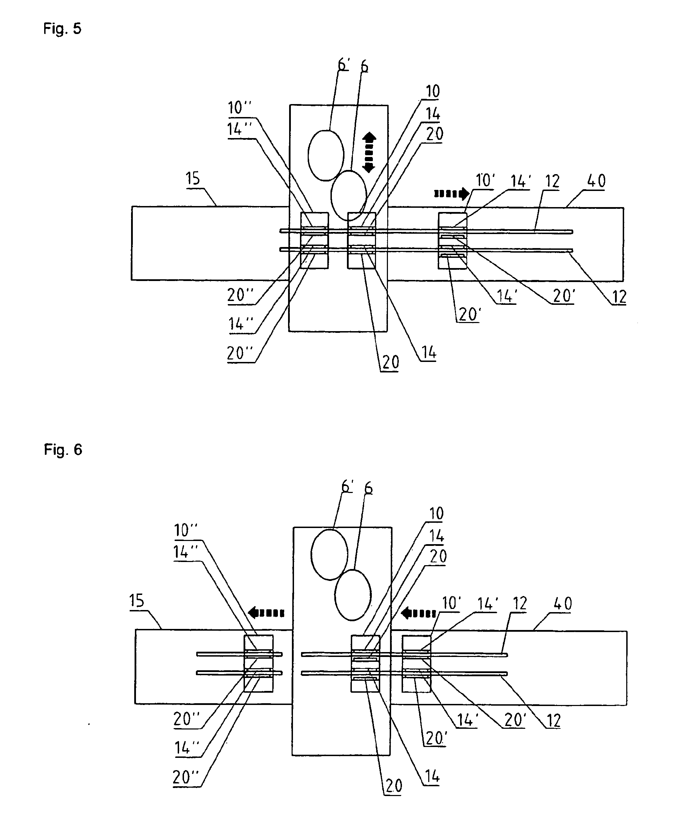

In dieser Position kann, wie es insbesondere Figur 5 zeigt, das Spannelement 20 der Zuführeinrichtung 10' bereits wieder gelöst werden und die Zuführeinrichtung 10' wieder von der Einspanneinrichtung 10 weg verfahren werden. Mit den Sägen 6 und 6' erfolgt nunmehr das Ablängen der zwischen Einspanneinrichtung 10 und Spanneinrichtung 10" fixierten Glasleiste. Dabei erfolgt mittels der Säge 6 ein Anschnitt des in der Einspanneinrichtung 10 fixierten Teils der Glasleiste 12, während mit der Säge 6' das Ablängen des in der Spanneinrichtung 10" eingespannten Teils der Glasleiste 12 erfolgt.

Der nun abgelängte Teil der Glasleiste 12 wird mittels der Spanneinrichtung 10", welche von der Einspanneinrichtung 10 weg verfahren wird, gemäß der Darstellung in Figur 6, über der Ablage 15 positioniert. Sodann wird das Spannelement 20" der Spanneinrichtung 10" gelöst, so dass die abgelängte Glasleiste 12 auf die Ablage 15 fällt. Währenddessen wird die Zuführeinrichtung 10' mit zwischen Spannelement 20' und Anlage 14' eingespannter Glasleiste 12 bereits wieder in Richtung der Einspanneinrichtung 10 verfahren.

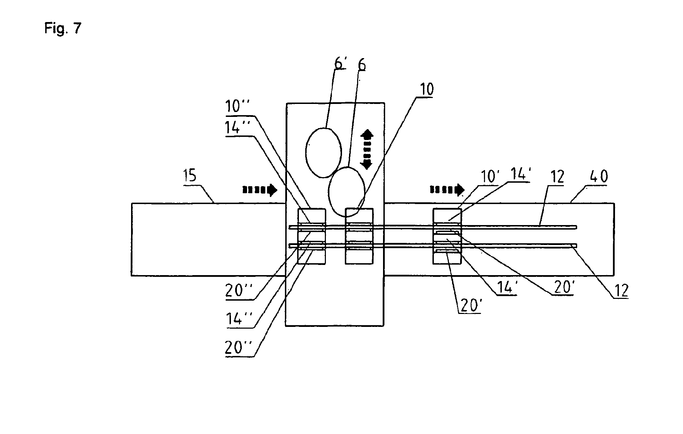

Im Folgenden wird, wie dies in Figur 7 gezeigt ist, die Spanneinrichtung 10" in Richtung der Einspanneinrichtung 10 verfahren, bis sie ihre ursprüngliche Position gemäß Figur 1 erreicht hat. In dieser Position liegt die Glasleiste 12 wieder mit ihrem Profilfuß 32 zwischen dem Spannelement 20" und der Anlage 14" der Spanneinrichtung 10", da mittlerweile die Zuführeinrichtung 10' die Glasleiste 12 zwischen ihrem Spannelement 20' und ihrer Anlage 14' eingespannt und in Richtung der Einspanneinrichtung 10 verfahren hat. Die Glasleiste 12 wird nun wieder zwischen Einspanneinrichtung 10 und Spanneinrichtung 10" fest eingespannt, wie dies ebenfalls in Figur 7 dargestellt ist.

Nunmehr wiederholt sich der zuvor beschriebene Ablängvorgang solange, bis die Glasleiste 12 aufgebraucht ist und eine neue Glasleiste mittels der Zuführeinrichtung 10' von der Positioniereinrichtung 40 entnommen wird.

Bei dem in den Figuren 1 bis 7 dargestellten Ausführungsbeispiel weisen die Einspanneinrichtung 10, die Zuführeinrichtung 10' und die Spanneinrichtung 10" jeweils zwei Spannelemente 20, 20', 20" und zwei Anlagen 14, 14', 14'' auf. Dabei können zwei Glasleisten 12 gleichzeitig bearbeitet werden, wodurch identische Glasleisten 12 entstehen. Dies ist insbesondere dann von Vorteil, wenn die Glasleisten 12 für rechteckige oder rautenförmige Fenster vorgesehen sind, da in diesem Fall jeweils zwei identische Glasleisten 12, das heißt Glasleisten 12 mit gleichen Gehrungsschnitten, benötigt werden.

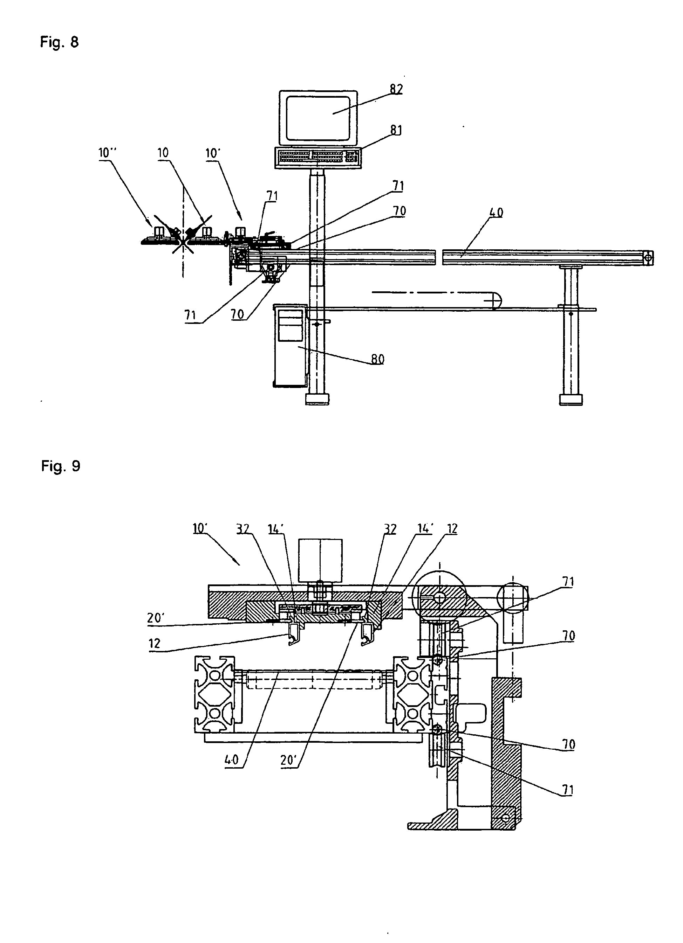

In Figur 8 ist eine Seitenansicht des Ausführungsbeispiels gemäß den Figuren 1 bis 7 ohne Ablage dargestellt. Die Zuführeinrichtung 10' und die Spanneinrichtung 10" befinden sich dabei in der Stellung gemäß Figur 1. Die Zuführeinrichtung 10' weist Laufrollen 71 auf, durch welche sie auf an der Positioniereinrichtung 40 angeordneten Führungsschienen 70 hin und her verschiebbar ist. Weiterhin ist in Figur 8 die Steuereinrichtung 80 dargestellt, mit welcher das Ablängen der Glasleisten 12 steuerbar ist. Der Steuereinrichtung 80 ist eine Tastatur 81 zugeordnet, mittels welcher die Steuereinrichtung 80 programmiert werden kann. Zur Darstellung der einzelnen Programmierschritte beziehungsweise auch der einzelnen Verfahrensschritte während des Betriebs der erfindungsgemäßen Vorrichtung ist weiterhin ein Display 82 vorgesehen.

Figur 9 zeigt eine Querschnittsdarstellung der Figur 8 im Bereich der Zuführeinrichtung 10'. Darin ist deutlich zu erkennen, wie zwei identische Glasleisten 12 mit ihren Profilfüßen 32 zwischen jeweils einem Spannelement 20' und einer Anlage 14' hängend eingespannt sind. In diesem Zustand sind die Glasleisten 12 bereits von der Positioniereinrichtung 40 entnommen. Weiterhin sind hier deutlich die Laufrollen 71 der Zuführeinrichtung 10' zu erkennen, welche auf an der Positioniereinrichtung 40 angeordneten Führungsschienen 70 abrollen.

Um die abgelängten Stabprofile 12 von der Ablage 15 zu entfernen, ist dort ein Schiebeelement 7 angeordnet, welches die abgelängten Glasleisten in ein Magazin 60 schiebt.

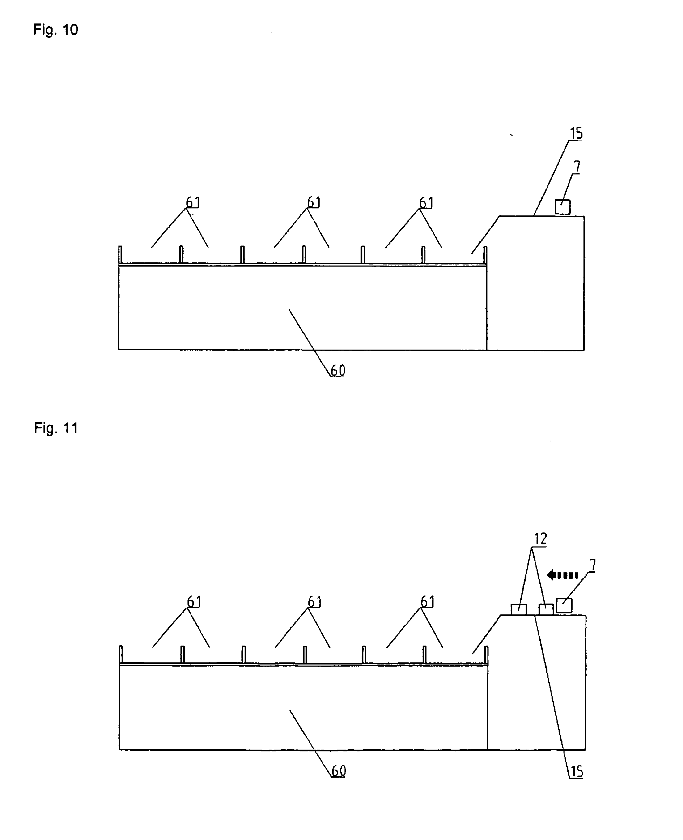

In den Figuren 10 bis 12 ist dabei ein horizontal verfahrbares Magazin dargestellt, wobei jeweils zwei gleichzeitig abgelängte Glasleisten in einer Ablegeeinheit 61 des Magazins 60 abgelegt werden.

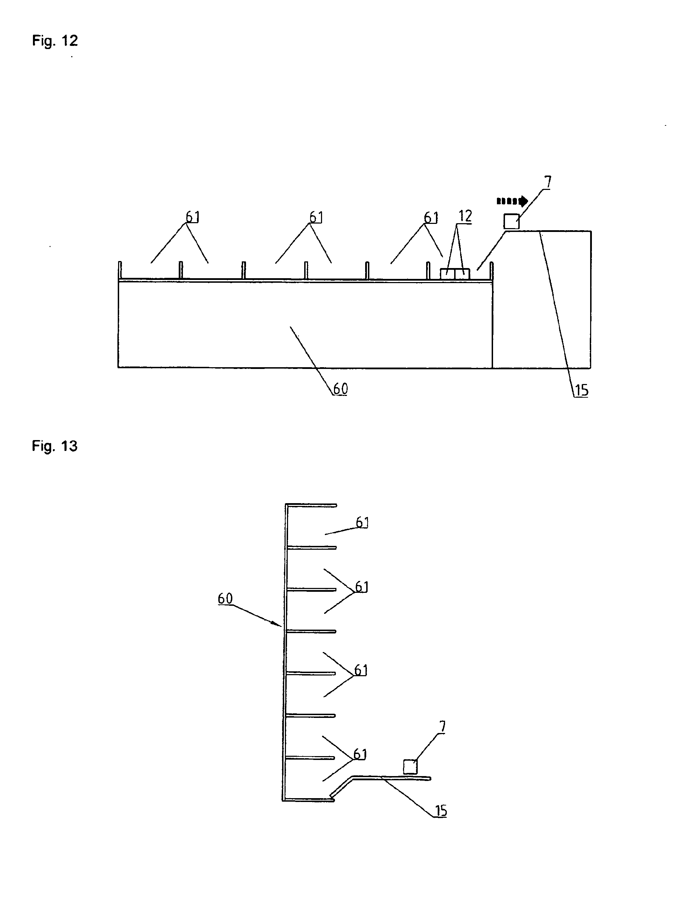

In den Figuren 13 bis 15 ist ein alternatives Magazin 60 vorgesehen, welches vertikal verfahrbar ist. Auch dieses Magazin 60 weist einzelne Ablageeineinheiten 61 auf, in welche die abgelängten Glasleisten 12 paarweise abgelegt werden.

Sowohl das Magazin 60 der Ausführungsform gemäß den Figuren 10 bis 12 als auch das der Figuren 13 bis 15 ist dabei derart ausgebildet, dass nachdem eine Ablageeineinheit 61 Glasleisten 12 aufgenommen hat, eine Ablageeineinheit 61 im Bereich der Ablage 15 angeordnet wird, in welche nunmehr ebenfalls paarweise die Glasleisten abgelegt werden können.

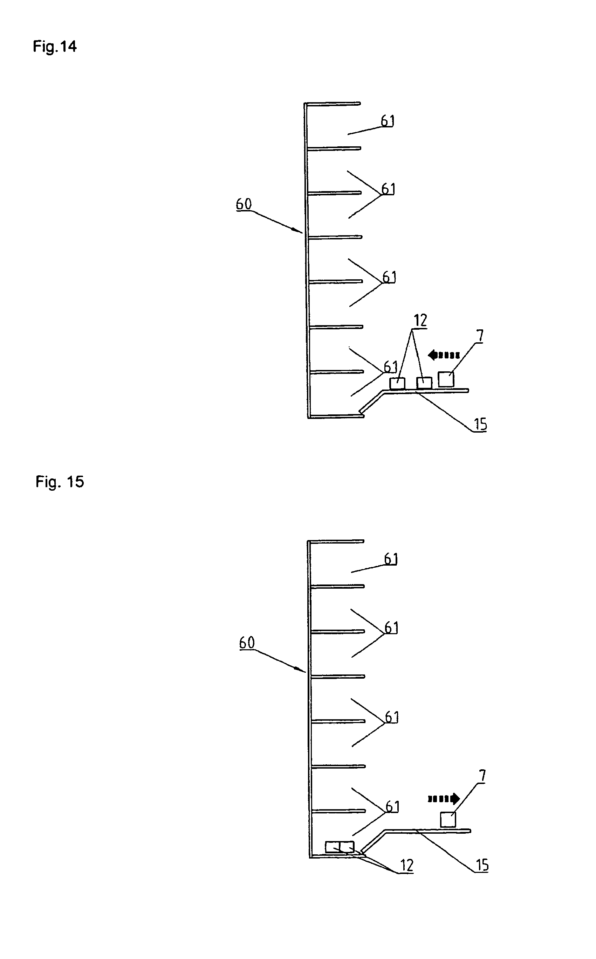

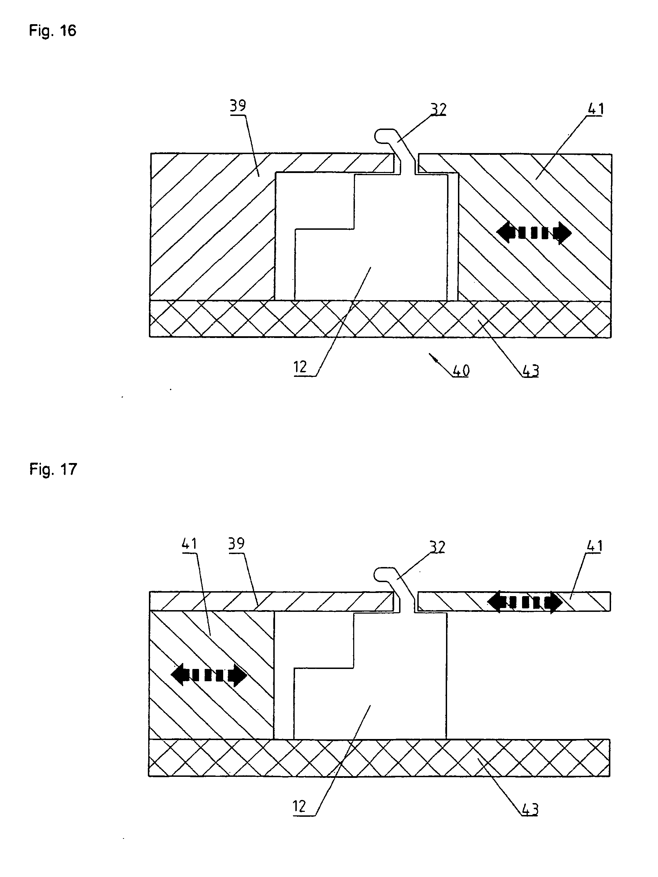

In den Figuren 16 bis 19 sind verschiedene Ausführungsformen eines Positionierelementes 41 dargestellt, welche der Positioniereinrichtung zugeordnet werden können. In den Figuren 14 bis 16 ist dieses Positionierelement 41 linear verfahrbar ausgebildet, wobei das Positionierelement 41 die auf einer Auflage 43 der Positioniereinrichtung 40 gegen einen Anschlag 39 verschiebt. Dabei weist der Profilfuß 32 der Glasleiste 12 immer von der Auflage 43 weg und zu der Zuführeinrichtung 10', welche auf die Positioniereinrichtung 40 absenkbar ist, hin.

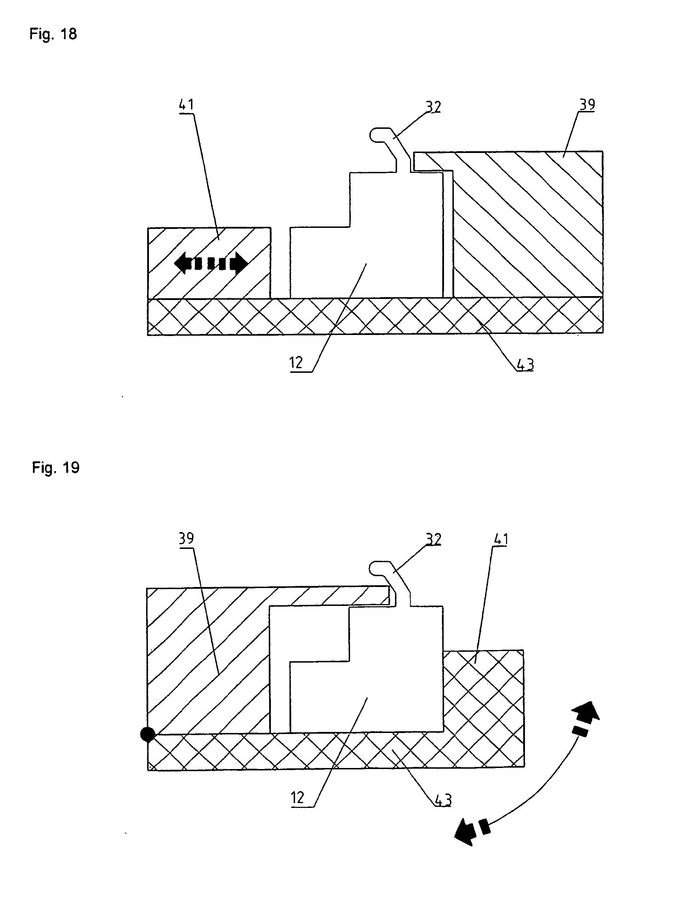

In Figur 19 ist ein Positionierelement 41 dargestellt, welches gegenüber einem Anschlag 39 verschwenkbar ist. Auch durch dieses Positionierelement 41 wird die Glasleiste 12 mit ihrem Profilfuß 32 derart positioniert, dass der Profilfuß 32 in Richtung der auf die Positioniereinrichtung 40 absenkbaren Zuführeinrichtung 10' weist.

Da die in den Figuren 1 bis 9 dargestellte Vorrichtung zum Bearbeiten von zwei Glasleisten 12 ausgebildet ist, weist die dortige Positioniereinrichtung 40 jeweils auch für jede Glasleiste 12 ein separates Positionierelement 41 sowie einen separaten Anschlag 39 auf, die dort allerdings nicht dargestellt sind.

### Bezugszeichenliste

- 5: Anschlag
- 6: Säge
- 6': Säge
- 7: Schiebeelement
- 10: Einspanneinrichtung
- 10': Zuführeinrichtung
- 10": Spanneinrichtung
- 12: Glasleiste
- 14: Anlage
- 14': Anlage
- 14'': Anlage
- 15: Ablage
- 16: Anlageleiste
- 18: Spannelement
- 20: Spannelement
- 20': Spannelement
- 20": Spannelement
- 26: Dichtlippe
- 32: Profilfuß
- 39: Anschlag
- 40: Positioniereinrichtung
- 41: Positionierelement
- 42: Fensterrahmen
- 43: Auflage
- 44: Glasscheibe
- 48: untere Profilwand
- 50: rückwärtige Profilwand
- 52: obere Profilwand
- 54: vordere Profilwand
- 60: Magazin
- 61: Ablageeinheit
- 70: Führungsschiene
- 71: Laufrolle
- 80: Steuereinrichtung
- 81: Tastatur
- 82: Display

## Patentansprüche

1. Ablängvorrichtung für Profilfüße (32) aufweisende Glasleisten (12) oder entsprechende Stabprofile, mit einer Einspanneinrichtung (10), die eine Anlage (14) für das Stabprofil, wenigstens ein verstellbares Spannelement (20) und eine Positioniereinrichtung (40) für das Stabprofil aufweist, **gekennzeichnet durch** eine wenigstens ein verstellbares Spannelement (20') und eine Anlage (14') aufweisende Zuführeinrichtung (10'), wobei die Zuführeinrichtung (10') dazu ausgebildet ist, das Stabprofil aus der Positioniereinrichtung (40) zu entnehmen und der Einspanneinrichtung (10) zuzuführen, wobei das wenigstens eine Spannelement (20') der Zuführeinrichtung (10') zum Greifen eines Profilfußes (32) des Stabprofils und zum Festspannen des Profilfußes (32) ausgebildet ist und wobei das wenigstens eine verstellbare Spannelement (20) der Einspanneinrichtung (10) zum Einspannen des Profilfußes (32) des Stabprofiles ausgebildet ist.

2. Vorrichtung nach Anspruch 1, **dadurch gekennzeichnet, dass** die Zuführeinrichtung (10') in Richtung der Einspanneinrichtung (10) verfahrbar ist.

3. Vorrichtung nach Anspruch 1, **dadurch gekennzeichnet, dass** die Zuführeinrichtung (10') über der Positioniereinrichtung (40) verfahrbar und auf die Positioniereinrichtung (40) absenkbar ausgebildet ist.

4. Vorrichtung nach Anspruch 1, **dadurch gekennzeichnet, dass** die Zuführeinrichtung (10') über der Positioniereinrichtung (40) verfahrbar und die Positioniereinrichtung (40) in Richtung der Zuführeinrichtung (10') anhebbar ausgebildet ist.

5. Vorrichtung nach einem der vorhergehenden Ansprüche, **dadurch gekennzeichnet, dass** eine Steuereinrichtung (80) zur Einstellung eines Verfahrweges der Zuführeinrichtung (10') parallel zur Längsachse des in der Einspanneinrichtung (10) eingespannten Stabprofils vorgesehen ist.

6. Vorrichtung nach einem der vorhergehenden Ansprüche, **dadurch gekennzeichnet, dass** die Positioniereinrichtung (40) ein verschwenkbares und/oder linear verfahrbahres Positionierelement (41), einen Anschlag (39) sowie eine Auflage (43) aufweist, auf welcher ein Stabprofil zwischen Positionierelement (41) und Anschlag (39) zur Entnahme durch das Spannelement (20') der Zuführeinrichtung (10') anordnenbar ist.

7. Vorrichtung nach Anspruch 6, **dadurch gekennzeichnet, dass** das Positionierelement (41) durch Federdruck beziehungsweise pneumatisch verschwenkbar beziehungsweise linear verfahrbar ausgebildet ist.

8. Vorrichtung nach einem der vorhergehenden Ansprüche, **dadurch gekennzeichnet, dass** ein Bevorratungsmagazin für eine Vielzahl von Stabprofilen und zwischen Bevorratungsmagazin und Positioniereinrichtung (40) eine Transporteinrichtung, wie beispielsweise ein Förderband oder dergleichen, vorgesehen ist.

9. Vorrichtung nach einem der vorhergehenden Ansprüche, **dadurch gekennzeichnet, dass** die Einspanneinrichtung (10) ortsfest an einen Arbeitsbereich eines Ablängwerkzeug, wie beispielsweise einer Säge (6, 6') oder dergleichen, angrenzend angeordnet ist.

10. Vorrichtung nach einem der vorhergehenden Ansprüche, **dadurch gekennzeichnet, dass** eine wenigstens ein Spannelement (20") und eine Anlage (14") aufweisende Spanneinrichtung (10") zum Abtransport des Stabprofiles vorgesehen ist, wobei das Stabprofil nach seinem Anschnitt mittels der zuführeinrichtung (10') durch die Spanneinrichtung (10") durchschiebbar ist.

11. Vorrichtung nach Anspruch 9, **dadurch gekennzeichnet, dass** die Spanneinrichtung (10") in Längsrichtung und/oder quer zur Längsrichtung des eingespannten Stabprofils verfahrbar ausgebildet ist.

12. Vorrichtung nach einem der vorhergehenden Ansprüche, **dadurch gekennzeichnet, dass** eine Ablage (15) für die abgelängten Stabprofile vorgesehen ist.

13. Vorrichtung nach Anspruch 11, **dadurch gekennzeichnet, dass** die Ablage (15) einen Schieber (7) aufweist, mittels welchem die abgelängten Stabprofile einem Magazin (60) zuführbar sind.

14. Vorrichtung nach Anspruch 12, **dadurch gekennzeichnet, dass** das Magazin (60) vertikal und/oder horizontal verfahrbar ausgebildet ist.

15. Vorrichtung nach Anspruch 12 oder 13, **dadurch gekennzeichnet, dass** das Magazin (60) eine Vielzahl von Ablageeinheiten (61) für Stabprofile beziehungsweise Glasleisten aufweist.

16. Vorrichtung nach einem der vorhergehenden Ansprüche, **dadurch gekennzeichnet, dass** die Einspanneinrichtung (10), die Zuführeinrichtung (10') sowie die Spanneinrichtung (10") jeweils wenigstens zwei Spannelement (20, 20', 20") und zwei Anlagen(14, 14', 14") für das simultane Bearbeiten beziehungsweise Ablängen von wenigstens zwei Stabprofile beziehungsweise Glasleisten (12) im wesentlichen parallel und mit Abstand zueinander einspannbar und simultan bearbeitbar beziehungsweise ablängbar sind.

17. Vorrichtung nach einem der vorhergehenden Ansprüche, **dadurch gekennzeichnet, dass** die Stabprofile beziehungsweise die Glasleisten (12) in der Einspanneinrichtung (10), der Zuführeinrichtung (10') und der Spanneinrichtung (10") hängend einspannbar sind.

18. Vorrichtung nach einem der vorhergehenden Ansprüche, **dadurch gekennzeichnet, dass** die Zuführeinrichtung (10') und die Spanneinrichtung (10") längsgeführt ausgebildet sind.

19. Vorrichtung nach einem der vorhergehenden Ansprüche, **dadurch gekennzeichnet, dass** die Zuführeinrichtung (10') und die Spanneinrichtung (10") längsgeführt ausgebildet sind, wobei vorzugsweise ein Schienensystem vorgesehen ist, an welchem die Zuführeinrichtung (10') und die Spanneinrichtung (10") hängend angeordnet sind.

20. Verfahren zum Ablängen von Profilfüße (32) aufweisenden Glasleisten (12) oder entsprechenden Stabprofilen, wobei das Stabprofil von einem Spannelement (20) einer Einspanneinrichtung (10) an einem Profilfuß (32) des Stabprofils eingespannt und ein Ablängen durchgeführt wird, wobei das Stabprofil in einer Positioniereinrichtung (40) positioniert wird, **dadurch gekennzeichnet, dass** das Stabprofil mittels einer Zuführeinrichtung (10') aus der Positioniereinrichtung (40) an dem Profilfuß (32) des Stabprofils gegriffen und in Richtung der Einspanneinrichtung (10) verfahren wird und dabei an einem ersten Abschnitt eines Profilfußes (32) mittels eines Spannelementes (20') der Zuführeinrichtung (10') eingespannt wird.

21. Verfahren nach Anspruch 20, **dadurch gekennzeichnet, dass** das Stabprofil mittels einer Transporteinrichtung von einem Bevorratungsmagazin für eine Vielzahl von Stabprofilen der Positioniereinrichtung (40) zugeführt wird.

22. Verfahren nach Anspruch 20 oder 21, **dadurch gekennzeichnet, dass** die abgelängten Stabprofile einem Magazin (60) zugeführt werden.

## Claims

1. Cutting-to-length device for glazing bars (12) which have profile feet (32), or corresponding rod profile members, with a clamping device (10), which comprises a support (14) for the rod profile member, at least one adjustable fixing element (20) and a positioning device (40) for the rod profile member, **characterised by** a feed device (10') having at least one adjustable fixing element (20') and a support (14'), wherein the feed device (10') is constructed for the purpose of removing the rod profile member from the positioning device (40) and feeding it to the clamping device (10), wherein the at least one fixing element (20') of the feed device (10') is constructed for gripping a profile foot (32) of the rod profile member and for fixing the profile foot (32) and wherein the at least one adjustable fixing element (20) of the clamping device is constructed for clamping the profile foot (32) of the rod profile member.

2. Device according to claim 1, **characterised in that** the feed device (10') is movable in the direction of the clamping device (10).

3. Device according to claim 1, **characterised in that** the feed device (10') is constructed to be movable over the positioning device (40) and lowerable onto the positioning device (40).

4. Device according to claim 1, **characterised in that** the feed device (10') is constructed to be movable over the positioning device (40) and the positioning device (40) is constructed to be raisable in the direction of the feed device (10').

5. Device according to any one of the preceding claims, **characterised in that** a control device (80) for setting a travel path of the feed device (10') parallel to the longitudinal axis of the rod profile member clamped in the clamping device (10) is provided.

6. Device according to any one of the preceding claims, **characterised in that** the positioning device (40) comprises a pivotable and/or linearly movable positioning element (41), an abutment (39) and a rest (43), on which a rod profile member can be arranged between positioning element (41) and abutment (39) for removal by the fixing element (20') of the feed device (10').

7. Device according to claim 6, **characterised in that** the positioning element (41) is constructed to be pivotable or linearly movable by spring pressure or pneumatically.

8. Device according to any one of the preceding claims, **characterised in that** a storage magazine for a plurality of rod profile members and, between storage magazine and positioning device (40), a transport device, such as, for example, a conveyor belt or the like, are provided.

9. Device according to any one of the preceding claims, **characterised in that** the clamping device (10) is arranged in stationary position to adjoin a work area of a tool for cutting to length, such as, for example, a saw (6, 6') or the like.

10. Device according to any one of the preceding claims, **characterised in that** a fixing device (10"), which comprises at least one fixing element (20") and support (14"), for transport away of the rod profile member is provided, wherein the rod profile member after cutting thereof can be pushed through the fixing device (10") by means of the feed device (10').

11. Device according to claim 9, **characterised in that** the fixing device (10") is constructed to be movable in longitudinal direction and/or transversely to the longitudinal direction of the clamped rod profile member.

12. Device according to any one of the preceding claims, **characterised in that** a deposit (15) for the rod profiles cut to length is provided.

13. Device according to claim 11, **characterised in that** the deposit (15) comprises a slide (7) by means of which the rod profile members cut to length can be fed to a magazine (60).

14. Device according to claim 12, **characterised in that** the magazine (60) is constructed to be vertically and/or horizontally movable.

15. Device according to claim 12 or 13, **characterised in that** the magazine (60) comprises a plurality of deposit units (61) for rod profile members or glazing bars.

16. Device according to any one of the preceding claims, **characterised in that** the clamping device (10), the feed device (10') and the fixing device (10") each comprise at least two fixing elements (20, 20', 20") and two supports (14, 14', 14") for simultaneous processing or cutting to length of at least two rod profile members or glazing bars (12) which can be clamped substantially parallel to and at a spacing from one another and simultaneously processed or cut to length.

17. Device according to any one of the preceding claims, **characterised in that** the rod profile members or the glazing bars (12) can be clamped in the clamping device (10), the feed device (10') and the fixing device (10") to hang.

18. Device according to any one of the preceding claims, **characterised in that** the feed device (10') and the fixing device (10") are constructed to be longitudinally guided.

19. Device according to any one of the preceding claims, **characterised in that** the feed device (10') and the fixing device (10") are constructed to be longitudinally guided, wherein for preference a rail system is provided at which the feed device (10') and the fixing device (10") are arranged to hang.

20. Method of cutting to length glazing bars (12), which have profile feet (32), or corresponding rod profile members, wherein the rod profile member is clamped by a fixing element (20) of a clamping device (10) at a profile foot (32) of the rod profile member and cutting to length is carried out, wherein the rod profile member is positioned in a positioning device (40), **characterised in that** the rod profile member is gripped by means of a feed device (10') from the positioning device (40) at the profile foot (32) of the rod profile and is moved in the direction of the clamping device (10) and **in that** case clamped in place at a first section of a profile foot (32) by means of a fixing element (20') of the feed device (10').

21. Method according to claim 20, **characterised in that** the rod profile member is fed by means of a transport device from a storage magazine for a plurality of rod profile members to the positioning device (40).

22. Method according to claim 20 or 21, **characterised in that** the rod profile members cut to length are fed to magazine (60).

## Revendications

1. Dispositif pour la coupe à longueur de barres de vitrage (12) présentant des pieds profilés (32) ou de barres profilées correspondantes, avec un dispositif de serrage (10) qui présente un appui (14) pour la barre profilée, au moins un élément de serrage réglable (20) et un dispositif de positionnement (40) pour la barre profilée, **caractérisé par** un dispositif d'alimentation (10') présentant au moins un élément de serrage réglable (20') et un appui (14'), dans lequel le dispositif d'alimentation (10') est réalisé de façon à reprendre la barre profilée hors du dispositif de positionnement (40) et à la transférer au dispositif de serrage (10), dans lequel ledit au moins un élément de serrage (20') du dispositif d'alimentation (10') est réalisé de façon à saisir un pied profilé (32) de la barre profilée et à immobiliser le pied profilé (32), et dans lequel ledit au moins un élément de serrage réglable (20) du dispositif de serrage (10) est réalisé de façon à serrer le pied profilé (32) de la barre profilée.

2. Dispositif selon la revendication 1, **caractérisé en ce que** le dispositif d'alimentation (10') est déplaçable en direction du dispositif de serrage (10).

3. Dispositif selon la revendication 1, **caractérisé en ce que** le dispositif d'alimentation (10') peut être déplacé au-dessus du dispositif de positionnement (40) et peut être abaissé sur le dispositif de positionnement (40).

4. Dispositif selon la revendication 1, **caractérisé en ce que** le dispositif d'alimentation (10') peut être déplacé au-dessus du dispositif de positionnement (40) et le dispositif de positionnement (40) peut être soulevé en direction du dispositif d'alimentation (10').

5. Dispositif selon l'une quelconque des revendications précédentes, **caractérisé en ce qu'**il est prévu un système de commande (80) pour le réglage d'une course de déplacement du dispositif d'alimentation (10') parallèlement à l'axe longitudinal de la barre profilée serrée dans le dispositif de serrage (10).

6. Dispositif selon l'une quelconque des revendications précédentes, **caractérisé en ce que** le dispositif de positionnement (40) présente un élément de positionnement (41) pouvant pivoter et/ou être déplacé linéairement, une butée (39) ainsi qu'un appui (43), sur lequel une barre profilée peut être disposée entre l'élément de positionnement (41) et la butée (39) pour être enlevée par l'élément de serrage (20') du dispositif d'alimentation (10').

7. Dispositif selon la revendication 6, **caractérisé en ce que** l'élément de positionnement (41) peut pivoter et/ou être déplacé linéairement au moyen d'une pression de ressort ou de façon pneumatique.

8. Dispositif selon l'une quelconque des revendications précédentes, **caractérisé en ce qu'**il est prévu un magasin de réserve pour une pluralité de barres profilées et, entre le magasin de réserve et le dispositif de positionnement (40), un dispositif de transport, comme par exemple une bande transporteuse ou analogue.

9. Dispositif selon l'une quelconque des revendications précédentes, **caractérisé en ce que** le dispositif de serrage (10) est fixé à proximité d'une zone de travail d'un outil de coupe à longueur, comme par exemple une scie (6, 6') ou analogue.

10. Dispositif selon l'une quelconque des revendications précédentes, **caractérisé en ce qu'**il est prévu un système de serrage (10") présentant au moins un élément de serrage (20") et un appui (14") pour l'évacuation de la barre profilée, dans lequel la barre profilée peut être déplacée après sa coupe à travers le système de serrage (10") au moyen du dispositif d'alimentation (10').

11. Dispositif selon la revendication 9, **caractérisé en ce que** le système de serrage (10") peut être déplacé en direction longitudinale et/ou transversalement à la direction longitudinale de la barre profilée serrée.

12. Dispositif selon l'une quelconque des revendications précédentes, **caractérisé en ce qu'**il est prévu une zone de dépôt (15) pour les barres profilées coupées à longueur.

13. Dispositif selon la revendication 11, **caractérisé en ce que** la zone de dépôt (15) présente un chariot (7), au moyen duquel les barres profilées coupées à longueur peuvent être envoyées à un magasin (60).

14. Dispositif selon la revendication 12, **caractérisé en ce que** le magasin (60) peut être déplacé verticalement et/ou horizontalement.

15. Dispositif selon la revendication 12 ou 13, **caractérisé en ce que** le magasin (60) présente une pluralité d'unités de dépôt (61) pour des barres profilées ou des barres de vitrage.

16. Dispositif selon l'une quelconque des revendications précédentes, **caractérisé en ce que** le dispositif de serrage (10), le dispositif d'alimentation (10') ainsi que le système de serrage (10") comportent chaque fois au moins deux éléments de serrage (20, 20', 20") et deux appuis (14, 14', 14") pour l'usinage simultané ou la coupe à longueur simultanée d'au moins deux barres profilées ou barres de vitrage (12) qui peuvent être serrées en position essentiellement parallèle et à distance l'une de l'autre et peuvent être usinées ou coupées à longueur simultanément.

17. Dispositif selon l'une quelconque des revendications précédentes, **caractérisé en ce que** les barres profilées ou les barres de vitrage (12) peuvent être serrées de façon suspendue dans le dispositif de serrage (10), le dispositif d'alimentation (10') et le système de serrage (10").

18. Dispositif selon l'une quelconque des revendications précédentes, **caractérisé en ce que** le dispositif d'alimentation (10') et le système de serrage (10") sont guidés longitudinalement.

19. Dispositif selon l'une quelconque des revendications précédentes, **caractérisé en ce que** le dispositif d'alimentation (10') et le système de serrage (10") sont guidés longitudinalement, dans lequel il est de préférence prévu un système de rails, sur lequel le dispositif d'alimentation (10') et le système de serrage (10") sont disposés en position suspendue.

20. Procédé pour couper à longueur des barres de vitrage (12) présentant des pieds profilés (32) ou des barres profilées correspondantes, dans lequel on serre la barre profilée par un élément de serrage (20) d'un dispositif de serrage (10) sur un pied profilé (32) de la barre profilée et on effectue à une coupe à longueur, dans lequel on positionne la barre profilée dans un dispositif de positionnement (40), **caractérisé en ce que** l'on saisit la barre profilée par le pied profilé (32) de la barre profilée hors du dispositif de positionnement (40) au moyen d'un dispositif d'alimentation (10') et on la serre à cette occasion sur un premier segment d'un pied profilé (32) au moyen d'un élément de serrage (20') du dispositif d'alimentation (10').

21. Procédé selon la revendication 20, **caractérisé en ce que** la barre profilée est envoyée au dispositif de positionnement (40) à partir d'un magasin de réserve pour une pluralité de barres profilées au moyen d'un dispositif de transport.

22. Procédé selon la revendication 20 ou 21, **caractérisé en ce que** les barres profilées coupées à longueur sont envoyées à un magasin (60).
